(19) Europäisches Patentamt
European Patent Office
Office européen des brevets

(11) **EP 4 335 665 B1**

(12) **EUROPEAN PATENT SPECIFICATION**

(45) Date of publication and mention
of the grant of the patent:
**23.07.2025 Bulletin 2025/30**

(21) Application number: **23192883.9**

(22) Date of filing: **23.08.2023**

(51) International Patent Classification (IPC):
**B60C 11/03** (2006.01)

(52) Cooperative Patent Classification (CPC):
**B60C 11/0302; B60C 11/0304; B60C 11/0306;
B60C 11/0332**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **07.09.2022 JP 2022142536**

(43) Date of publication of application:
**13.03.2024 Bulletin 2024/11**

(73) Proprietor: **Sumitomo Rubber Industries, Ltd.
Kobe-shi, Hyogo 651-0072 (JP)**

(72) Inventors:
• **SASAKI, Tatsuya**
**Kobe-shi, 651-0072 (JP)**
• **OISHI, Naoto**
**Kobe-shi, 651-0072 (JP)**
• **SANAE, Ryuhei**
**Kobe-shi, 651-0072 (JP)**
• **MIYAZAWA, Ken**
**Kobe-shi, 651-0072 (JP)**
• **OKAWARA, Renya**
**Kobe-shi, 651-0072 (JP)**

(74) Representative: **Manitz Finsterwald
Patent- und Rechtsanwaltspartnerschaft mbB
Martin-Greif-Straße 1
80336 München (DE)**

(56) References cited:
EP-B1- 0 299 766          WO-A1-03/061993
US-A1- 2013 269 846       US-B1- 6 715 522

**Description**

BACKGROUND OF THE INVENTION

Field of the Invention

The present invention relates to a pneumatic tire including a tread portion.

Background Art

Hitherto, various pneumatic tires focusing on drainage performance, wear resistance, and noise performance have been proposed. For example, the pneumatic tire of Japanese Laid-Open Patent Publication No. 2015-224002 has been proposed to improve wear resistance and noise performance while maintaining drainage performance, by providing a narrow portion having a small width in each axial groove and increasing an angle of each axial groove with respect to the tire axial direction.

However, in the pneumatic tire of Japanese Laid-Open Patent Publication No. 2015-224002, decreasing the groove width of each axial groove decreases the groove volume thereof, which causes a decrease in drainage performance, and increasing the angle of each axial groove causes a decrease in wear resistance. Therefore, further improvement of drainage performance, wear resistance, and noise performance is desired.

A tire having the features of the preamble of claim 1 is known from US 6 715 522 B1. Related tires are described in US 2013/269846 A1, WO 03/061 993 A1 and EP 0 299 766 B1.

The present invention has been made in view of the above circumstances, and a main object of the present invention is to provide a pneumatic tire that can have improved noise performance while maintaining good drainage performance and wear resistance.

SUMMARY OF THE INVENTION

The object is solved by a tire having the features of claim 1. Sub-claims are directed to embodiments of the invention. The present invention is directed to a pneumatic tire including a tread portion, wherein: the tread portion includes a plurality of circumferential grooves continuously extending in a tire circumferential direction, and a plurality of land portions demarcated by the plurality of circumferential grooves; the plurality of land portions include at least one pattern land portion on which axial grooves are arranged in a number of N pitches in the tire circumferential direction so as to extend in a tire axial direction; in a load-applied state where a load that is 80% of a standardized load is applied in a state where the pneumatic tire is fitted on a standardized rim and adjusted to a standardized internal pressure, a ground-contact surface shape of the tread portion has a first tread end, a second tread end, and a first ground-contact end edge extending from the first tread end to the second tread end on one side in the tire circumferential direction; the number of pitches N is not less than 85; and a first straight line connecting both ends in the tire axial direction of a portion, of the first ground-contact end edge, traversing the pattern land portion satisfies the following formula (1).
[Math. 1]

$$0.90 \ <= \frac{N}{L/(w \tan \theta 1)} \ <= \ 1.10 \qquad \ldots (1)$$

where

N: number of pitches of the axial grooves
L: tire circumferential length at a tire equator (m)
w: width in the tire axial direction of the pattern land portion (m)
$\theta 1$: angle of the first straight line with respect to the tire axial direction (°).

By having the above-described configuration, the pneumatic tire of the present invention can have improved noise performance while maintaining good drainage performance and wear resistance.

According to an embodiment of the invention, in the load-applied state, the ground-contact surface shape of the tread portion has a second ground-contact end edge extending from the first tread end to the second tread end on another side in the tire circumferential direction, and
a second straight line connecting both ends in the tire axial direction of a portion, of the second ground-contact end edge, traversing the pattern land portion satisfies the following formula (2),
[Math. 2]

$$0.90 <= \frac{N}{L/(w \tan \theta 2)} <= 1.10 \qquad \ldots (2)$$

where

N: number of pitches of the axial grooves
L: tire circumferential length at the tire equator (m)
w: width in the tire axial direction of the pattern land portion (m)
θ2: angle of the second straight line with respect to the tire axial direction (°).

According to an embodiment of the invention, the angle θ1 of the first straight line is equal to the angle θ2 of the second straight line.

According to an embodiment of the invention, a tire rotation direction is predetermined for the tread portion, and the first ground-contact end edge is a ground-contact end edge on a leading edge side in the tire rotation direction.

According to an embodiment of the invention, an angle θ3 of each of the axial grooves with respect to the tire axial direction is in a range of 0 to 10°.

According to an embodiment of the invention, the plurality of circumferential grooves include a first shoulder circumferential groove provided between the tire equator and the first tread end, and a first middle circumferential groove provided between the first shoulder circumferential groove and the tire equator, and the pattern land portion includes a first shoulder land portion demarcated between the first shoulder circumferential groove and the first tread end.

According to an embodiment of the invention, the pattern land portion includes a first middle land portion demarcated between the first shoulder circumferential groove and the first middle circumferential groove.

BRIEF DESCRIPTION OF THE DRAWINGS

FIG. 1 is a schematic diagram showing an embodiment of a ground-contact surface shape of the pneumatic tire of the present invention;
FIG. 2 is an explanatory diagram for a first shoulder land portion; and
FIG. 3 is an explanatory diagram for a first middle land portion.

DETAILED DESCRIPTION

Hereinafter, embodiments of the present invention will be described in detail with reference to the drawings.

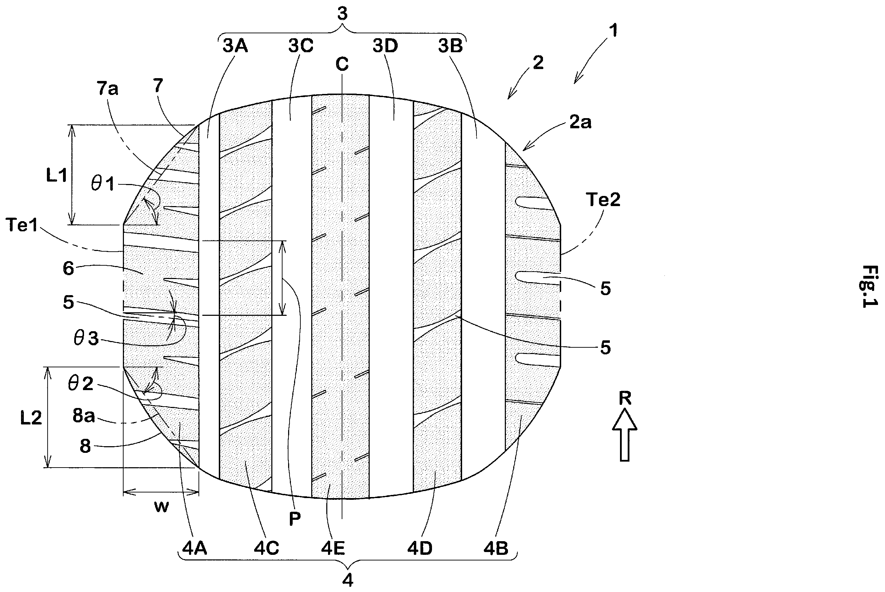

FIG. 1 is a schematic diagram showing a ground-contact surface shape 2a of a pneumatic tire 1 of an embodiment of the invention. As shown in FIG. 1, the pneumatic tire 1 of the present embodiment of the invention includes a tread portion 2. The tread portion 2 of the present embodiment of the invention includes a plurality of circumferential grooves 3 continuously extending in the tire circumferential direction, and a plurality of land portions 4 demarcated by the plurality of circumferential grooves 3.

The plurality of land portions 4 of the present embodiment of the invention include at least one pattern land portion 6 on which axial grooves 5 are arranged in the tire circumferential direction with the number of pitches N so as to extend in the tire axial direction. Such a tread portion 2 can suppress occurrence of a hydroplaning phenomenon, in which a steering wheel and brakes become uncontrollable, even during running at a high speed on a wet road surface, and serves to improve the drainage performance of the pneumatic tire 1.

The tread portion 2 has, for example, the ground-contact surface shape 2a shown in FIG. 1, in a load-applied state where a load that is 80% of a standardized load is applied in a standardized state. Here, the "standardized state" is a state where the pneumatic tire 1 is fitted on a standardized rim and adjusted to a standardized internal pressure, and no load is applied to the pneumatic tire 1. Hereinafter, unless otherwise specified, dimensions and the like of components of the pneumatic tire 1 are values measured in the standardized state.

If there is a standard system including a standard on which the pneumatic tire 1 is based, the "standardized rim" is a rim that is defined for each tire by the standard, and is, for example, the "standard rim" in the JATMA standard, the "Design Rim" in the TRA standard, or the "Measuring Rim" in the ETRTO standard. If there is no standard system including a standard on which the pneumatic tire 1 is based, the "standardized rim" is a rim having the smallest rim diameter and having the smallest rim width, among rims onto which the pneumatic tire 1 can be fitted and which do not cause air leakage.

If there is a standard system including a standard on which the pneumatic tire 1 is based, the "standardized internal pressure" is an air pressure that is defined for each tire by the standard, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. If there is no standard system including a standard on which the pneumatic tire 1 is based, the "standardized internal pressure" is an air pressure that is defined for each tire by the manufacturer or the like.

If there is a standard system including a standard on which the pneumatic tire 1 is based, the "standardized load" is a load that is defined for each tire by the standard, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. If there is no standard system including a standard on which the pneumatic tire 1 is based, the "standardized load" is a load that is defined for each tire by the manufacturer or the like.

In the load-applied state, the ground-contact surface shape 2a of the tread portion 2 of the present embodiment of the invention has a first tread end Te1, a second tread end Te2, and a first ground-contact end edge 7 extending from the first tread end Te1 to the second tread end Te2 on one side in the tire circumferential direction. Here, the center in the tire axial direction between the first tread end Te1 and the second tread end Te2 is a tire equator C.

A first straight line 7a connecting both ends in the tire axial direction of a portion, of the first ground-contact end edge 7, traversing the pattern land portion 6 of the present embodiment of the invention satisfies the following formula (1).

[Math. 1]

$$0.90 \ <= \ \frac{N}{L/(w \tan \theta 1)} \ <= \ 1.10 \qquad \qquad \ldots (1)$$

where

N: number of pitches of the axial grooves 5
L: tire circumferential length at the tire equator C (m)
w: width in the tire axial direction of the pattern land portion 6 (m)
$\theta 1$: angle of the first straight line 7a with respect to the tire axial direction (°).

In such a tread portion 2, the portion, of the first ground-contact end edge 7, traversing the pattern land portion 6 and the axial grooves 5 are continuous during running, so that the fluctuations of the groove cross-sectional areas of the axial grooves 5 are reduced, and pitch noise can be suppressed. Accordingly, the tread portion 2 can reduce pitch noise even in the case where the groove volume of each axial groove 5 is large and an angle $\theta 3$ of each axial groove 5 with respect to the tire axial direction is small. Therefore, the pneumatic tire 1 of the present embodiment of the invention can have improved noise performance while maintaining good drainage performance and wear resistance.

In a more preferable mode, a tire rotation direction R is predetermined for the tread portion 2. The first ground-contact end edge 7 is, for example, a ground-contact end edge on the leading edge side in the tire rotation direction R. Such a tread portion 2 can reduce pitch noise caused due to contact with the ground during running.

In the load-applied state, the ground-contact surface shape 2a of the tread portion 2 of the present embodiment of the invention has a second ground-contact end edge 8 extending from the first tread end Te1 to the second tread end Te2 on the other side in the tire circumferential direction. A second straight line 8a connecting both ends in the tire axial direction of a portion, of the second ground-contact end edge 8, traversing the pattern land portion 6 of the present embodiment of the invention satisfies the following formula (2).

[Math. 2]

$$0.90 \ <= \ \frac{N}{L/(w \tan \theta 2)} \ <= \ 1.10 \qquad \qquad \ldots (2)$$

where

N: number of pitches of the axial grooves 5
L: tire circumferential length at the tire equator C (m)
w: width in the tire axial direction of the pattern land portion 6 (m)
$\theta 2$: angle of the second straight line 8a with respect to the tire axial direction (°).

In such a tread portion 2, the portion, of the second ground-contact end edge 8, traversing the pattern land portion 6 and the axial grooves 5 are continuous during running, so that the fluctuations of the groove cross-sectional areas of the axial grooves 5 are reduced, and pitch noise can be suppressed. Accordingly, the tread portion 2 can reduce pitch noise even in the case where the groove volume of each axial groove 5 is large and the angle $\theta 3$ of each axial groove 5 with respect to the tire axial direction is small. Therefore, the pneumatic tire 1 of the present embodiment of the invention can have improved noise performance while maintaining good drainage performance and wear resistance.

From this viewpoint, the first straight line 7a and the second straight line 8a more preferably satisfy the following formula (3) and the following formula (4), respectively.

[Math.3]

$$0.95 \le \frac{N}{L/(w \tan \theta1)} \le 1.05 \qquad \dots(3)$$

[Math. 4]

$$0.95 \le \frac{N}{L/(w \tan \theta2)} \le 1.05 \qquad \dots(4)$$

where

N: number of pitches of the axial grooves 5
L: tire circumferential length at the tire equator C (m)
w: width in the tire axial direction of the pattern land portion 6 (m)
$\theta1$: angle of the first straight line 7a with respect to the tire axial direction (°)
$\theta2$: angle of the second straight line 8a with respect to the tire axial direction (°).

The angle $\theta1$ of the first straight line 7a is preferably equal to the angle $\theta2$ of the second straight line 8a. In such a tread portion 2, a length L1 in the tire circumferential direction of the portion, of the first ground-contact end edge 7, traversing the pattern land portion 6 and a length L2 in the tire circumferential direction of the portion, of the second ground-contact end edge 8, traversing the pattern land portion 6 are equal to each other, so that the tread portion 2 serves to further reduce pitch noise.

The angle $\theta3$ of each axial groove 5 with respect to the tire axial direction is preferably in the range of 0 to 10°. Such an axial groove 5 inhibits a sharp corner from being formed in the land portion 4, and serves to improve the wear resistance of the pneumatic tire 1. From this viewpoint, the angle $\theta3$ of each axial groove 5 is more preferably in the range of 0 to 5°.

The number of pitches N of the axial grooves 5 is not less than 85. When the number of pitches N is not less than 85, overlap of the frequency of pitch noise with the frequency of air column resonance sound can be suppressed. From this viewpoint, the number of pitches N of the axial grooves 5 is more preferably not less than 90 and further preferably not less than 100.

The plurality of circumferential grooves 3 of the present embodiment of the invention extend between the first tread end Te1 and the second tread end Te2 of the tread portion 2. The plurality of circumferential grooves 3 preferably include a first shoulder circumferential groove 3A provided between the tire equator C and the first tread end Te1, and a second shoulder circumferential groove 3B provided between the tire equator C and the second tread end Te2.

The plurality of circumferential grooves 3 of the present embodiment of the invention include a first middle circumferential groove 3C provided between the first shoulder circumferential groove 3A and the tire equator C, and a second middle circumferential groove 3D provided between the second shoulder circumferential groove 3B and the tire equator C. Such a tread portion 2 can improve the drainage performance of the pneumatic tire 1 by the plurality of circumferential grooves 3.

The plurality of land portions 4 preferably include a first shoulder land portion 4A demarcated between the first shoulder circumferential groove 3A and the first tread end Te1, and a second shoulder land portion 4B demarcated between the second shoulder circumferential groove 3B and the second tread end Te2. The plurality of land portions 4 of the present embodiment of the invention include a first middle land portion 4C demarcated between the first shoulder circumferential groove 3A and the first middle circumferential groove 3C, and a second middle land portion 4D demarcated between the second shoulder circumferential groove 3B and the second middle circumferential groove 3D. The plurality of land portions 4 include, for example, a crown land portion 4E demarcated between the first middle circumferential groove 3C and the second middle circumferential groove 3D.

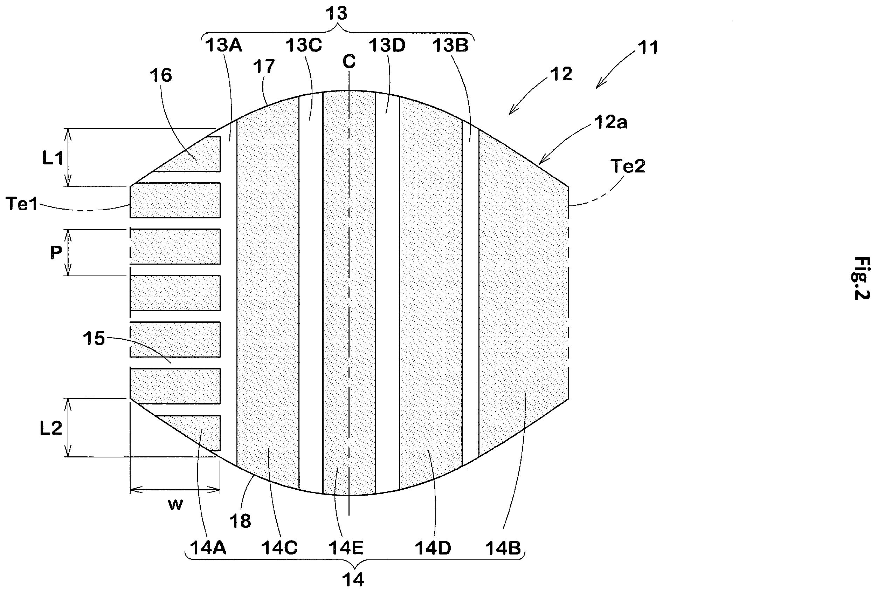

FIG. 2 is a schematic diagram showing a ground-contact surface shape 12a of a pneumatic tire 11 of a second embodiment of the invention. As shown in FIG. 2, the pneumatic tire 11 of the second embodiment of the invention includes a tread portion 12 as in the above-described pneumatic tire 1. As in the above-described tread portion 2, the tread portion 12 of the second embodiment of the invention includes a plurality of circumferential grooves 13 continuously extending in the tire circumferential direction, and a plurality of land portions 14 demarcated by the plurality of circumferential grooves 13. As in the above-described ground-contact surface shape 2a, the ground-contact surface shape 12a in FIG. 2 is a ground-contact surface shape of the tread portion 12 in a load-applied state where a load that is 80% of a standardized load is applied in a standardized state.

As in the above-described circumferential grooves 3, the plurality of circumferential grooves 13 of the second embodiment of the invention include a first shoulder circumferential groove 13A, a second shoulder circumferential groove 13B, a first middle circumferential groove 13C, and a second middle circumferential groove 13D. As in the above-described land portions 4, the plurality of land portions 14 of the second embodiment of the invention include a first shoulder land portion 14A, a second shoulder land portion 14B, a first middle land portion 14C, a second middle land portion 14D, and a crown land portion 14E.

The first shoulder land portion 14A of the second embodiment of the invention is a pattern land portion 16 on which axial grooves 15 are arranged in the tire circumferential direction with a number of pitches N so as to extend in the tire axial direction. FIG. 2 illustrates that the axial grooves 15 of the first shoulder land portion 14A extend along the tire axial direction. Such axial grooves 15 serve to improve the wear resistance of the pneumatic tire 11.

In the pattern land portion 16 of the second embodiment of the invention, a length L1 in the tire circumferential direction of a portion, of a first ground-contact end edge 17, traversing the first shoulder land portion 14A approximates each pitch P in the tire circumferential direction of the axial grooves 15 of the first shoulder land portion 14A. In such a pattern land portion 16, the axial grooves 15 sequentially come into contact with the ground when the pneumatic tire 11 contacts the ground, so that the pattern land portion 16 can further reduce pitch noise.

In the pattern land portion 16 of the second embodiment of the invention, a length L2 in the tire circumferential direction of a portion, of a second ground-contact end edge 18, traversing the first shoulder land portion 14A approximates each pitch P in the tire circumferential direction of the axial grooves 15 of the first shoulder land portion 14A. In such a pattern land portion 16, the axial grooves 15 sequentially become separated from the ground when the pneumatic tire 11 is separated from the ground, so that the pattern land portion 16 can further reduce pitch noise.

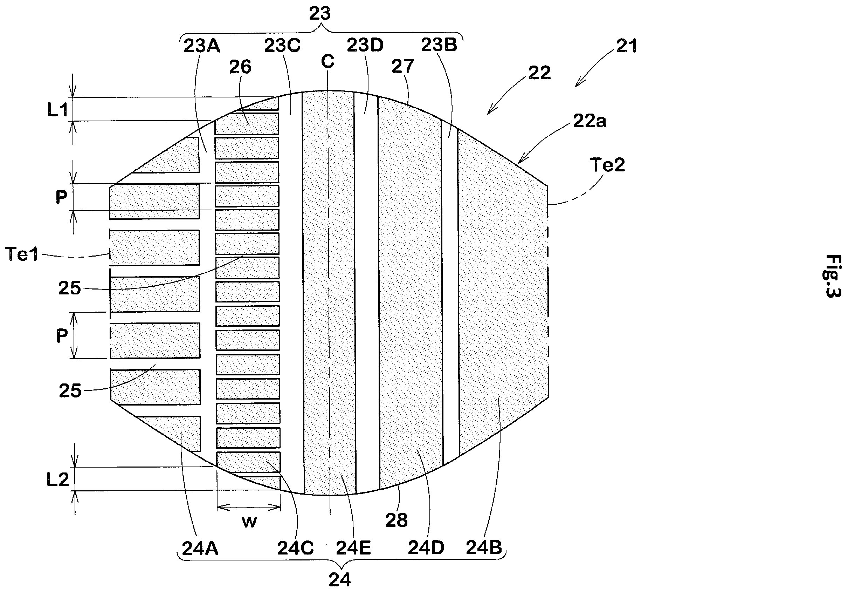

FIG. 3 is a schematic diagram showing a ground-contact surface shape 22a of a pneumatic tire 21 of a third embodiment of the invention. As shown in FIG. 3, the pneumatic tire 21 of the third embodiment of the invention includes a tread portion 22 as in the above-described pneumatic tire 1. As in the above-described tread portion 2, the tread portion 22 of the third embodiment of the invention includes a plurality of circumferential grooves 23 continuously extending in the tire circumferential direction, and a plurality of land portions 24 demarcated by the plurality of circumferential grooves 23. As in the above-described ground-contact surface shape 2a, the ground-contact surface shape 22a in FIG. 3 is a ground-contact surface shape of the tread portion 22 in a load-applied state where a load that is 80% of a standardized load is applied in a standardized state.

As in the above-described circumferential grooves 3, the plurality of circumferential grooves 23 of the third embodiment of the invention include a first shoulder circumferential groove 23A, a second shoulder circumferential groove 23B, a first middle circumferential groove 23C, and a second middle circumferential groove 23D. As in the above-described land portions 4, the plurality of land portions 24 of the third embodiment of the invention include a first shoulder land portion 24A, a second shoulder land portion 24B, a first middle land portion 24C, a second middle land portion 24D, and a crown land portion 24E.

The first shoulder land portion 24A and the first middle land portion 24C of the third embodiment of the invention are each a pattern land portion 26 on which axial grooves 25 are arranged in the tire circumferential direction with a number of pitches N so as to extend in the tire axial direction. FIG. 3 illustrates that the axial grooves 25 of the first shoulder land portion 24A and the first middle land portion 24C extend along the tire axial direction. Such axial grooves 25 serve to improve the wear resistance of the pneumatic tire 21.

In the pattern land portion 26 of the third embodiment of the invention, a length L1 in the tire circumferential direction of a portion, of a first ground-contact end edge 27, traversing the first middle land portion 24C approximates each pitch P in the tire circumferential direction of the axial grooves 25 of the first middle land portion 24C. In such a pattern land portion 26, the axial grooves 25 sequentially come into contact with the ground when the pneumatic tire 21 contacts the ground, so that the pattern land portion 26 can further reduce pitch noise.

In the pattern land portion 26 of the third embodiment of the invention, a length L2 in the tire circumferential direction of a portion, of a second ground-contact end edge 28, traversing the first middle land portion 24C approximates each pitch P in the tire circumferential direction of the axial grooves 25 of the first middle land portion 24C. In such a pattern land portion 26, the axial grooves 25 sequentially become separated from the ground when the pneumatic tire 21 is separated from the ground, so that the pattern land portion 26 can further reduce pitch noise.

Each pitch P in the tire circumferential direction of the axial grooves 25 of the first middle land portion 24C is preferably smaller than each pitch P in the tire circumferential direction of the axial grooves 25 of the first shoulder land portion 24A. As for such pattern land portions 26, the first shoulder land portion 24A and the first middle land portion 24C can cooperate to reduce pitch noise.

Although not shown, the second shoulder land portion 24B and the second middle land portion 24D are also preferably pattern land portions 26 in which pitches P of axial grooves 25 are equal to those of the first shoulder land portion 24A and the first middle land portion 24C. The tread portion 22 can achieve the above-described effects if any one of the first shoulder land portion 24A, the second shoulder land portion 24B, the first middle land portion 24C, and the second middle land portion 24D is a pattern land portion 26.

Although the particularly preferred embodiments of the present invention have been described in detail above, the present invention is not limited to the above-described embodiments, and various modifications can be made to implement the present invention within the scope of the appended claims.

EXAMPLES

Two types of pneumatic tires (first and second tires) having the pattern land portion shown in FIG. 2 and having different sizes were produced as test tires such that first shoulder land portions thereof had specifications in Table 1 and Table 2, and were tested for noise performance, drainage performance, and wear resistance. Common specifications and test methods are as follows.

<Common Specifications>

Tire size of first tire: 265/55R20
Air pressure: 230 kPa
Tire circumferential length L: 2.470 m
Applied load: 6.80 kN
Angle $\theta 1$ of first straight line: 34°
Angle $\theta 2$ of second straight line: 34°
Angle $\theta 3$ of axial groove: 0°
Tire size of second tire: 205/55R16
Air pressure: 230 kPa
Tire circumferential length L: 1.995 m
Applied load: 4.22 kN
Angle $\theta 1$ of first straight line: 52°
Angle $\theta 2$ of second straight line: 52°
Angle $\theta 3$ of axial groove: 0°

<Noise Performance>

Using a drum type tester installed in an anechoic room, sound pressure was measured when a test tire was caused to coast from 100 km/h to 40 km/h. The results are represented as indexes with the result of Comparative Example 1 being regarded as 100 for the first tires and with the result of Comparative Example 6 being regarded as 100 for the second tires. A higher value indicates that the sound pressure is lower and that the noise performance is better.

<Drainage Performance>

Using an inside drum type tester, a running speed at which a hydroplaning phenomenon occurred was measured for a test tire. The results are represented as indexes with the result of Comparative Example 1 being regarded as 100 for the first tires and with the result of Comparative Example 6 being regarded as 100 for the second tires. A higher value indicates that the running speed is higher and that the drainage performance is better.

<Wear Resistance>

Using a bench wear energy evaluation tester, the wear energy of a test tire was measured. The results are represented as indexes with the result of Comparative Example 1 being regarded as 100 for the first tires and with the result of Comparative Example 6 being regarded as 100 for the second tires. A higher value indicates that the wear energy is smaller and that the wear resistance is better.
The results of the tests are shown in Table 1 and Table 2. Thereby, example tires Ex. 9 to Ex. 13 refer to not-claimed embodiments.

[Table 1]

|  | Comp. Ex. 1 | Comp. Ex. 2 | Comp. Ex. 3 | Comp. Ex. 4 | Comp. Ex. 5 | Ex. 1 | Ex. 2 | Ex. 3 | Ex. 4 | Ex. 5 | Ex. 6 |
|---|---|---|---|---|---|---|---|---|---|---|---|
| Test tire | First | First | First | First | First | First | First | First | First | First | First |

(continued)

|  | Comp. Ex. 1 | Comp. Ex. 2 | Comp. Ex. 3 | Comp. Ex. 4 | Comp. Ex. 5 | Ex. 1 | Ex. 2 | Ex. 3 | Ex. 4 | Ex. 5 | Ex. 6 |
|---|---|---|---|---|---|---|---|---|---|---|---|
| Number of pitches N of axial grooves | 76 | 84 | 104 | 85 | 85 | 85 | 89 | 94 | 99 | 103 | 85 |
| Width w of pattern land portion (m) | 0.039 | 0.039 | 0.039 | 0.035 | 0.052 | 0.039 | 0.039 | 0.039 | 0.039 | 0.039 | 0.043 |
| Parameter $\alpha$ | 0.81 | 0.89 | 1.11 | 0.81 | 1.21 | 0.91 | 0.95 | 1.00 | 1.05 | 1.10 | 1.00 |
| Noise performance (index) | 100 | 100 | 100 | 100 | 100 | 110 | 115 | 120 | 115 | 110 | 115 |
| Drainage performance (index) | 100 | 100 | 100 | 100 | 100 | 100 | 100 | 100 | 100 | 100 | 100 |
| Wear resistance (index) | 100 | 100 | 100 | 100 | 100 | 100 | 100 | 100 | 100 | 100 | 100 |
| Combined performance (index) | 300 | 300 | 300 | 300 | 300 | 310 | 315 | 320 | 315 | 310 | 315 |

[Table 2]

|  | Ex. 7 | Ex. 8 | Comp. Ex. 6 | Comp. Ex. 7 | Comp. Ex. 8 | Ex. 9 | Ex. 10 | Ex. 11 | Ex. 12 | Ex. 13 |
|---|---|---|---|---|---|---|---|---|---|---|
| Test tire | First | First | Second | Second | Second | Second | Second | Second | Second | Second |
| Number of pitches N of axial grooves | 85 | 85 | 72 | 75 | 72 | 65 | 63 | 60 | 55 | 45 |
| Width w of pattern land portion (m) | 0.045 | 0.047 | 0.026 | 0.026 | 0.030 | 0.026 | 0.026 | 0.026 | 0.026 | 0.035 |
| Parameter $\alpha$ | 1.04 | 1.09 | 1.20 | 1.25 | 1.39 | 1.08 | 1.05 | 1.00 | 0.92 | 1.01 |
| Noise performance (index) | 115 | 110 | 100 | 100 | 100 | 110 | 115 | 120 | 115 | 110 |
| Drainage performance (index) | 100 | 100 | 100 | 100 | 100 | 100 | 100 | 100 | 100 | 100 |
| Wear resistance (index) | 100 | 100 | 100 | 100 | 100 | 100 | 100 | 100 | 100 | 100 |
| Combined performance (index) | 315 | 310 | 300 | 300 | 300 | 310 | 315 | 320 | 315 | 310 |

Here, a parameter $\alpha$ is the following formula (5).
[Math. 5]

$$\alpha = \frac{N}{L/(w \tan \theta 1)} \qquad \ldots (5)$$

As a result of the tests, it is confirmed that the pneumatic tire of each Example has improved noise performance while maintaining good drainage performance and wear resistance, as compared to each Comparative Example.

**Claims**

1. A pneumatic tire (1, 11, 21) comprising a tread portion (2, 12, 22), wherein

   the tread portion (2, 12, 22) includes a plurality of circumferential grooves (3, 13, 23) continuously extending in a tire circumferential direction, and a plurality of land portions (4, 14, 24) demarcated by the plurality of circumferential grooves (3, 13, 23),
   the plurality of land portions (4, 14, 24) include at least one pattern land portion (6, 16, 26) on which axial grooves (5, 15, 25) are arranged in a number of N pitches in the tire circumferential direction so as to extend in a tire axial direction, and
   in a load-applied state where a load that is 80% of a standardized load is applied in a state where the pneumatic tire (1, 11, 21) is fitted on a standardized rim and adjusted to a standardized internal pressure, a ground-contact surface shape (2a, 12a, 22a) of the tread portion (2, 12, 22) has a first tread end (Te1), a second tread end (Te2), and a first ground-contact end edge (7, 17, 27) extending from the first tread end (Te1) to the second tread end (Te2) on one side in the tire circumferential direction,
   **characterized in that**
   the number of pitches N is not less than 85, and
   a first straight line (7a) connecting both ends in the tire axial direction of a portion, of the first ground-contact end edge (7, 17, 27), traversing the pattern land portion (6, 16, 26) satisfies the following formula (1),
   [Math. 1]

$$0.90 \leq \frac{N}{L/(w \tan \theta 1)} \leq 1.10 \qquad \ldots (1)$$

   where

   N: number of pitches of the axial grooves (5, 15, 25)
   L: tire circumferential length at a tire equator (C) (m)
   w: width in the tire axial direction of the pattern land portion (6, 16, 26) (m)
   $\theta 1$: angle of the first straight line (7a) with respect to the tire axial direction (°).

2. The pneumatic tire (1, 11, 21) according to claim 1, wherein

   in the load-applied state, the ground-contact surface shape (2a, 12a, 22a) of the tread portion (2, 12, 22) has a second ground-contact end edge (8, 18, 28) extending from the first tread end (Te1) to the second tread end (Te2) on another side in the tire circumferential direction, and
   a second straight line (8a) connecting both ends in the tire axial direction of a portion, of the second ground-contact end edge (8, 18, 28), traversing the pattern land portion (6, 16, 26) satisfies the following formula (2),
   [Math. 2]

$$0.90 \leq \frac{N}{L/(w \tan \theta 2)} \leq 1.10 \qquad \ldots (2)$$

   where

   N: number of pitches of the axial grooves (5, 15, 25)
   L: tire circumferential length at the tire equator (C) (m)
   w: width in the tire axial direction of the pattern land portion (6, 16, 26) (m)

θ2: angle of the second straight line (8a) with respect to the tire axial direction (°).

3. The pneumatic tire (1, 11, 21) according to claim 2, wherein the angle θ1 of the first straight line (7a) is equal to the angle θ2 of the second straight line (8a).

4. The pneumatic tire (1, 11, 21) according to any one of claims 1 to 3, wherein

   a tire rotation direction (R) is predetermined for the tread portion (2, 12, 22), and
   the first ground-contact end edge (7, 17, 27) is a ground-contact end edge on a leading edge side in the tire rotation direction (R).

5. The pneumatic tire (1) according to any one of claims 1 to 4, wherein an angle θ3 of each of the axial grooves (5) with respect to the tire axial direction is in a range of 0 to 10°.

6. The pneumatic tire (1, 11, 21) according to any one of claims 1 to 5, wherein

   the plurality of circumferential grooves (3, 13, 23) include a first shoulder circumferential groove (3A. 13A, 23A) provided between the tire equator (C) and the first tread end (Te1), and a first middle circumferential groove (3C, 13C, 23C) provided between the first shoulder circumferential groove (3A. 13A, 23A) and the tire equator (C), and
   the pattern land portion (6, 16, 26) includes a first shoulder land portion (4A, 14A, 24A) demarcated between the first shoulder circumferential groove (3A. 13A, 23A) and the first tread end (Te1).

7. The pneumatic tire (1, 11, 21) according to claim 6, wherein the pattern land portion (26) includes a first middle land portion (24C) demarcated between the first shoulder circumferential groove (23A) and the first middle circumferential groove (23C).


**Patentansprüche**

1. Luftreifen (1, 11, 21) mit einem Laufflächenabschnitt (2, 12, 22), wobei

   der Laufflächenabschnitt (2, 12, 22) eine Vielzahl von Umfangsrillen (3, 13, 23), die sich kontinuierlich in einer Reifenumfangsrichtung erstrecken, und eine Vielzahl von Landabschnitten (4, 14, 24) aufweist, die durch die Vielzahl von Umfangsrillen (3, 13, 23) abgegrenzt sind,
   die Vielzahl von Landabschnitten (4, 14, 24) mindestens einen Profillandabschnitt (6, 16, 26) aufweist, auf dem axiale Rillen (5, 15, 25) in einer Anzahl von N Teilungsabständen in der Reifenumfangsrichtung angeordnet sind, um sich in einer Reifenaxialrichtung zu erstrecken, und
   in einem Lastaufbringungszustand, in dem eine Last, die 80% einer standardisierten Last beträgt, in einem Zustand aufgebracht wird, in dem der Luftreifen (1, 11, 21) auf eine standardisierte Felge aufgezogen und auf einen standardisierten Innendruck eingestellt ist, eine Bodenkontaktoberflächenform (2a, 12a, 22a) des Laufflächenabschnitts (2, 12, 22) ein erstes Laufflächenende (Te1), ein zweites Laufflächenende (Te2) und eine erste Bodenkontaktendkante (7, 17, 27) aufweist, die sich von dem ersten Laufflächenende (Te1) zu dem zweiten Laufflächenende (Te2) auf einer Seite in der Reifenumfangsrichtung erstreckt,
   **dadurch gekennzeichnet, dass**
   die Anzahl von Teilungsabständen N nicht weniger als 85 beträgt, und
   eine erste gerade Linie (7a), die beide Enden in der Reifenaxialrichtung eines Abschnitts der ersten Bodenkontaktendkante (7, 17, 27), die den Profillandabschnitt (6, 16, 26) durchquert, verbindet, die folgende Formel (1) erfüllt,
   [Gl. 1]

$$0{,}90 \;<=\; \frac{N}{L/(w \tan \theta 1)} \;<=\; 1{,}10 \qquad\qquad \dots (1)$$

   wobei

   N: Anzahl von Teilungsabständen der axialen Rillen (5, 15, 25)
   L: Reifenumfangslänge an einem Reifenäquator (C) (m)

w: Breite in der Reifenaxialrichtung des Profillandabschnitts (6, 16, 26) (m)

θ1: Winkel der ersten geraden Linie (7a) in Bezug auf die Reifenaxialrichtung (°).

2. Luftreifen (1, 11, 21) nach Anspruch 1, wobei

in dem Lastaufbringungszustand die Bodenkontaktoberflächenform (2a, 12a, 22a) des Laufflächenabschnitts (2, 12, 22) eine zweite Bodenkontaktendkante (8, 18, 28) aufweist, die sich von dem ersten Laufflächenende (Te1) zu dem zweiten Laufflächenende (Te2) auf einer anderen Seite in der Reifenumfangsrichtung erstreckt, und eine zweite gerade Linie (8a), die beide Enden in der Reifenaxialrichtung eines Abschnitts der zweiten Bodenkontaktendkante (8, 18, 28), die den Profillandabschnitt (6, 16, 26) durchquert, verbindet, die folgende Formel (2) erfüllt,

[Gl. 2]

$$0{,}90 \;<=\; \frac{N}{L/(w \tan \theta 2)} \;<=\; 1{,}10 \qquad \ldots (2)$$

wobei

N: Anzahl von Teilungsabständen der axialen Rillen (5, 15, 25)

L: Reifenumfangslänge an dem Reifenäquator (C) (m)

w: Breite in der Reifenaxialrichtung des Profillandabschnitts (6, 16, 26) (m)

θ2: Winkel der zweiten geraden Linie (8a) in Bezug auf die Reifenaxialrichtung (°).

3. Luftreifen (1, 11, 21) nach Anspruch 2, wobei der Winkel θ1 der ersten geraden Linie (7a) gleich dem Winkel θ2 der zweiten geraden Linie (8a) ist.

4. Luftreifen (1, 11, 21) nach einem der Ansprüche 1 bis 3, wobei

eine Reifendrehrichtung (R) für den Laufflächenabschnitt (2, 12, 22) vorgegeben ist, und die erste Bodenkontaktendkante (7, 17, 27) eine Bodenkontaktendkante auf einer Vorderkantenseite in der Reifendrehrichtung (R) ist.

5. Luftreifen (1) nach einem der Ansprüche 1 bis 4, wobei ein Winkel θ3 jeder der Axialrillen (5) in Bezug auf die Reifenaxialrichtung in einem Bereich von 0 bis 10° liegt.

6. Luftreifen (1, 11, 21) nach einem der Ansprüche 1 bis 5, wobei

die Vielzahl von Umfangsrillen (3, 13, 23) eine erste Schulterumfangsrille (3A, 13A, 23A), die zwischen dem Reifenäquator (C) und dem ersten Laufflächenende (Te1) vorgesehen ist, und eine erste mittlere Umfangsrille (3C, 13C, 23C) aufweist, die zwischen der ersten Schulterumfangsrille (3A, 13A, 23A) und dem Reifenäquator (C) vorgesehen ist, und der Profillandabschnitt (6, 16, 26) einen ersten Schulterlandabschnitt (4A, 14A, 24A) aufweist, der zwischen der ersten Schulterumfangsrille (3A, 13A, 23A) und dem ersten Laufflächenende (Te1) abgegrenzt ist.

7. Luftreifen (1, 11, 21) nach Anspruch 6, wobei der Profillandabschnitt (26) einen ersten mittleren Landabschnitt (24C) aufweist, der zwischen der ersten Schulterumfangsrille (23A) und der ersten mittleren Umfangsrille (23C) abgegrenzt ist.

**Revendications**

1. Bandage pneumatique (1, 11, 21) comprenant une portion formant bande de roulement (2, 12, 22), dans lequel

la portion formant bande de roulement (2, 12, 22) inclut une pluralité de rainures circonférentielles (3, 13, 23) s'étendant en continu dans une direction circonférentielle du pneumatique, et une pluralité de portions en relief (4, 14, 24) délimitées par la pluralité de rainures circonférentielles (3, 13, 23), la pluralité de portions en relief (4, 14, 24) incluent au moins une portion en relief structurée (6, 16, 26) sur laquelle des rainures axiales (5, 15, 25) sont agencées en nombre de N pas dans la direction circonférentielle du pneumatique de manière à s'étendre dans une direction axiale du pneumatique, et

dans un état d'application de charge dans lequel une charge qui est de 80 % d'une charge standardisée est appliquée dans un état dans lequel le bandage pneumatique (1, 11, 21) est monté sur une jante standardisée et est ajusté à une pression interne standardisée, une forme de surface de contact au sol (2a, 12a, 22a) de la portion formant bande de roulement (2, 12, 22) a une première extrémité de bande de roulement (Te1), une seconde extrémité de bande de roulement (Te2), et un premier bord d'extrémité de contact au sol (7, 17, 27) s'étendant depuis la première extrémité de bande de roulement (Te1) jusqu'à la seconde extrémité de bande de roulement (Te2) sur un côté dans la direction circonférentielle du pneumatique,

**caractérisé en ce que**

le nombre de pas N n'est pas inférieur à 85, et

une première ligne rectiligne (7a) connectant les deux extrémités dans la direction axiale du pneumatique d'une portion, du premier bord d'extrémité de contact au sol (7, 17, 27), traversant la portion en relief structurée (6, 16, 26) satisfait à la formule (1) suivante :

[Math. 1]

$$0.90 \; <= \; \frac{N}{L/(w \tan \theta 1)} \; <= \; 1.10 \qquad \ldots (1)$$

où

N : nombre de pas des rainures axiales (5, 15, 25)
L : longueur circonférentielle du pneumatique au niveau d'un équateur de pneumatique (C) (m)
w : largeur dans la direction axiale du pneumatique de la portion en relief structurée (6, 16, 26) (m)
$\theta 1$ : angle de la première ligne droite (7a) par rapport à la direction axiale du pneumatique (°).

2. Bandage pneumatique (1, 11, 21) selon la revendication 1, dans lequel

dans l'état d'application de charge, la forme de surface de contact au sol (2a, 12a, 22a) de la portion formant bande de roulement (2, 12, 22) a un second bord d'extrémité de contact au sol (8, 18, 28) s'étendant depuis la première extrémité de bande de roulement (Te1) jusqu'à la seconde extrémité de bande de roulement (Te2) sur un autre côté dans la direction circonférentielle du pneumatique, et

une seconde ligne droite (8a) connectant les deux extrémités dans la direction axiale du pneumatique d'une portion, du second bord d'extrémité de contact au sol (8, 18, 28), traversant la portion en relief structurée (6, 16, 26) satisfait à la formule (2) suivante :

[Math. 2]

$$0.90 \; <= \; \frac{N}{L/(w \tan \theta 2)} \; <= \; 1.10 \qquad \ldots (2)$$

où

N : nombre de pas des rainures axiales (5, 15, 25)
L : longueur circonférentielle du pneumatique au niveau d'un équateur de pneumatique (C) (m)
w : largeur dans la direction axiale du pneumatique de la portion en relief structurée (6, 16, 26) (m)
$\theta 2$ : angle de la seconde ligne droite (8a) par rapport à la direction axiale du pneumatique (°).

3. Bandage pneumatique (1, 11, 21) selon la revendication 2, dans lequel l'angle $\theta 1$ de la première ligne droite (7a) est égal à l'angle $\theta 2$ de la seconde ligne droite (8a).

4. Bandage pneumatique (1, 11, 21) selon l'une quelconque des revendications 1 à 3, dans lequel

une direction de rotation du pneumatique (R) est prédéterminée pour la portion formant bande de roulement (2, 12, 22), et

le premier bord d'extrémité de contact au sol (7, 17, 27) est un bord d'extrémité de contact au sol sur un côté de bord d'attaque dans la direction de rotation du pneumatique (R).

5. Bandage pneumatique (1) selon l'une quelconque des revendications 1 à 4, dans lequel un angle θ3 de chacune des rainures axiales (5) par rapport à la direction axiale du pneumatique est dans une plage de 0 à 10°.

6. Bandage pneumatique (1) selon l'une quelconque des revendications 1 à 5, dans lequel

la pluralité de rainures circonférentielles (3, 13, 23) incluent une première rainure circonférentielle d'épaulement (3A, 13A, 23A) prévue entre l'équateur de pneumatique (C) et la première extrémité de bande de roulement (Te1), et une première rainure circonférentielle médiane (3C, 13C, 23C) prévue entre la première rainure circonférentielle d'épaulement (3A, 13A, 23A) et l'équateur de pneumatique (C), et
la portion en relief structurée (6, 16, 26) inclut une première portion en relief d'épaulement (4A, 14A, 24A) délimitée entre la première rainure circonférentielle d'épaulement (3A, 13A, 23A) et la première extrémité de bande de roulement (Te1).

7. Bandage pneumatique (1, 11, 21) selon la revendication 6, dans lequel la portion en relief structurée (26) inclut une première portion en relief médiane (24C) délimitée entre la première rainure circonférentielle d'épaulement (23A) et la première rainure circonférentielle médiane (23C).

**Fig.1**

Fig.2

**Fig.3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015224002 A
- US 6715522 B1
- US 2013269846 A1
- WO 03061993 A1
- EP 0299766 B1